# EUROPEAN PATENT APPLICATION

(11) **EP 1 835 593 A1**
(43) Date of publication of application: **19.09.2007**
(21) Application number: 05822529.3
(22) Date of filing: 27.12.2005
(51) Int. Cl.: H02J 7/34, H01M 10/44

(54) **MOBILE TELEPHONE TERMINAL CHARGING CONTROL DEVICE AND CHARGING CONTROL METHOD**

(30) Priority: 06.01.2005 JP 2005001500
(71) Applicant: NEC Corporation, Minato-ku Tokyo 108-8001 (JP)
(72) Inventor: OTSUKI, Michihito, NEC Corporation, Minato-ku, Tokyo 108-8001 (JP)
(74) Representative: Vossius & Partner
(86) International application number: PCT/JP2005/023975
(87) International publication number: WO 2006/073101

(57) **Abstract**

There is provided a charge control apparatus and a charge control method for a portable telephone terminal in which an operation to charge a battery is controlled according to a voltage of the battery and a use state of the user to prevent generation of heat in the portable telephone terminal due to the operation with consumption of a large current. The use state judge circuit 111 determines whether a sufficient voltage is being applied from an AC adapter 102 to the battery 109, temporarily stops the battery charge to supply the current only to the load circuit 107 if the consumption current consumed by the load circuit 107 is large and a sufficient current is not supplied to the battery 109, thereby suppressing the heat generated when a sufficient current cannot be supplied to the battery 109. Also, it is possible to prevent the restriction of the use of the load circuit 107 due to the heat generation or the insufficient current.

## Description

### TECHNICAL FIELD

The present invention pertains to a charge control apparatus and a charge control method for a portable telephone terminal, and in particular, to a charge control apparatus and a charge control method for a portable telephone terminal in which an operation to charge a battery is controlled according to a voltage of the battery and a state of the portable telephone terminal to prevent generation of heat in the portable telephone terminal due to a large current.

### RELATED ART

In general, a secondary battery is adopted as a power source in a portable telephone terminal such as a cellular phone. Particularly, a lithium ion battery has a high energy density per unitary volume and a high energy density per unitary mass, and when the lithium ion battery is mounted in a portable telephone terminal, it is possible to reduce the size and the weight of the portable telephone.

The methods to charge the lithium ion battery includes a constant-voltage charge method in which a current is supplied to the battery with the voltage of the battery kept fixed, and a constant-current, constant-voltage charge method in which after the constant-current charge is carried out by supplying a fixed current to the battery, a constant-voltage charge method is employed to charge the battery. In both methods, the charge is finished at detection of an event in which the current for the charge in the constant-voltage charge method is equal to or less than a predetermined current.

Moreover, during the charge, an AC adapter that is a direct current power source with an output voltage set to a high value is connected to the battery. As a circuit to perform the constant-voltage charge and the constant-current charge on the basis of the DC power source, there are used, for example, a circuit of series dropper type, a DC - DC comparator, and a circuit of pulse width control type which uses a current limit function of an AC adapter and which controls the widths of on- and off-pulses of a saturable switch element. For example, if the battery charge voltage is 4.2 Voltage (V) in the charge of the battery, the output voltage of the AC adaptor in use is set to about 5.2 V to about 5.6 V.

Furthermore, the current consumed by the portable telephone terminal tends to increase as the display screen size becomes greater and the functions such as the visual telephone function and the high picture quality and the flash function of cameras are improved. On the other hand, the portable telephone terminal tends to be smaller and thinner.

Additionally, while the consumption current increases, the utilization time becomes longer and hence there exists a tendency to increase battery capacity. As a result, the range of voltage used by the battery becomes wider, and a boost and buck circuit is frequently used. Therefore, even if load circuitry in the apparatus conducts one operation, the consumption current varies due to the battery voltage, and in particular, the consumption current becomes relatively larger when the capacity of the battery to be charged is small, that is, the battery voltage is low. On the other hand, when the portable telephone terminal is used to charge itself, the heat generation due to the allowable dissipation in the portable telephone terminal determined by the charge voltage, the charge current, the load current, and the like becomes larger as the size of the terminal decreases, and hence a countermeasure against the heat generation is a problem to be solved.

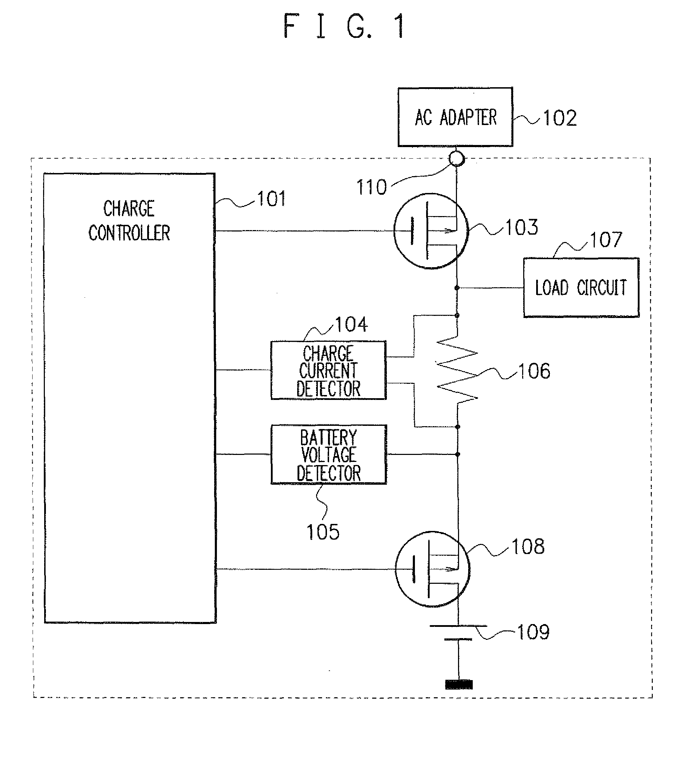

Referring now to FIG. 1, description will be given of a conventional charge control method for a portable telephone terminal. A charge circuit that is disposed in a conventional portable telephone terminal and controls operation to charge a battery 109 includes an input terminal 110 connected to an output terminal of an AC adapter 102. Furthermore, in the charge circuit, a Field-Effect Transistor (FET) 103 is disposed between the input terminal 110 and the battery 109 to drop the voltage of the inputted DC current, and a charge control circuit 101 controls the operation of the FET 103.

The charge control circuit 101 controls the gate of the FET 103 according to the current detected by a charge current detector circuit 104 such that the current outputted from the FET 103 is set to a predetermined current value. Also, the control circuit 101 controls the FET 103 according to the output from the detector 105 such that the voltage applied to the battery 109 is set to a predetermined voltage value. The charge circuit shown in FIG. 1 is a series dropper charge circuit disposed in a portable telephone terminal. A charge circuit of a DC-DC converter or a pulse-width control type may be used instead of a series dropper type.

In this state, in the series dropper type charge circuit, the input voltage of the charge circuit, that is, the voltage difference between the output voltage of the AC adapter and the input voltage of the battery 109 being charged is applied between the input and the output of the charge control circuit 101. Therefore, if the output voltage of the AC adapter 102 is set to a high value, the voltage drop of the AC adapter 102 due to the control circuit 101 in the portable telephone terminal generates heat.

According to the output voltage from the AC adapter 102 shown in FIG. 1, at least one volt is dropped due to the FET 103 of the charge circuit and the voltage thus dropped results in heat generation in the FET 103. Therefore, when a large amount of heat is generated and in which cooling means cannot be incorporated against the heat generation in the portable telephone terminal, the allowable dissipation at the FET 103 occupies a significant position for the internal heat generation.

In the conventional portable telephone terminal, the difficulty can be avoided by the method using a DC-DC converter and the pulse control method, means to reduce the allowable dissipation of the FET 103. However, when the DC-DC converter is adopted in the charge circuit, the ON and OFF operations for a large current causes noise in the converter. Particularly, for a communication apparatus such as a portable telephone terminal, influence of the noise upon a high-frequency circuit is a serious problem. Additionally, in general, when a large current flows in the charge circuit of a DC-DC converter type, the size of the charge circuit becomes larger, leading to a problem of the mounting area in the portable telephone terminal.

Also, when the charge circuit of a pulse width control type is selected, since the pulse width is controlled by a microcomputer in the portable telephone terminal, the control of the microcomputer becomes complicated. In addition, according to the pulse width control scheme, the charge voltage is generally set to a value higher than the target voltage of the battery to shorten the charge time, and hence a voltage exceeding the target voltage is temporarily applied to the battery. This causes a problem of safety of the battery and a problem of influence upon a lifetime of the battery.

Furthermore, according to the conventional method controlling the current of the AC adapter, since the adapter of the portable telephone terminal takes a standardized shape, and the portable telephone terminal is often charged by an AC adapter not dedicated to that terminal, there possibly occurs a problem of heat generation, when an adapter that is not assumed to be used is connected to the terminal.

In this situation, patent document 1 proposes a power source device which is applicable, even if a regulator of a voltage drop type is adopted in the charge control circuit, to a small-sized electronic device such as a cellular phone by controlling the output voltage on the AC adapter side and which is capable of suppressing the heat generation in the charge control circuit during the battery charge.

Patent document 2 proposes a charge system in which only when a cellular phone is not in the call state, its battery is rapidly charged. Since the high-speed charge is not conducted in the call state, an excessive current does not flow in the charger to conduct the charge and hence the amount of generated heat is suppressed, and the battery of the cellular phone can be rapidly charged while the small size of the charger is kept unchanged.
Patent document 1: Japanese Patent Application Laid-Open Ser. No. 2004-252658
Patent document 2: Japanese Patent Application Laid-Open Ser. No. Hei9-130456

### PROBLEMS TO BE SOLVED BY THE INVENTION

However, the inventions described above have the following problems.

The power source device of patent document 1 requires a dedicated AC adapter, and the problem of heat generation likely occurs, as in the pulse charge scheme, when an adapter other than the dedicated AC adapter is employed.

Also, in the conventional portable telephone terminal, as the consumption current of the load circuit in the terminal increases, the consumption current may become larger than the charge current depending on the state of the terminal and the battery voltage. Therefore, when the battery 109 of the charge circuit shown in FIG. 1 is not fully charged, it is difficult to save the charge current for the battery 109 and the consumption current for the load circuit 107 of the portable telephone terminal, and hence the user cannot conduct a desired operation.

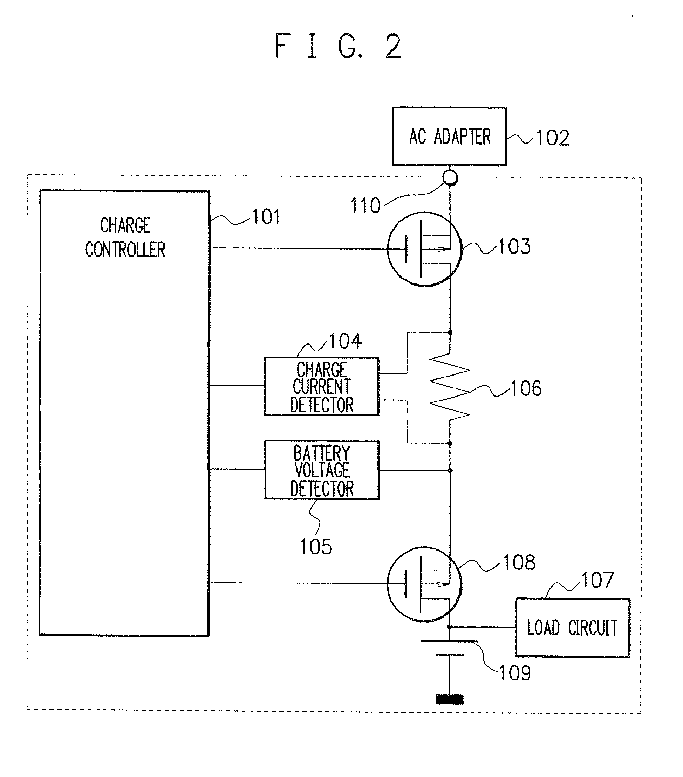

Furthermore, there has been considered a method in which by placing the load circuit 107 in the portable telephone terminal shown in FIG. 2 before the charge current detector 104, the charge current is saved for the battery 109 while the current is supplied to the load circuit 107 by use of the current limit function of the AC adapter 102. However, in this method, since the charge voltage depends on the battery voltage, the consumption current of the load circuit 107 cannot be lowered, and a large current flows through the FET 103, which possibly leads to unfavorable heat generation. Also, the consumption current will become larger than the charge current and hence the user's operation is restricted.

It is therefore an object of the present invention to propose a charge control apparatus and a charge control method for a portable telephone terminal that lowers the heat generation in the portable telephone terminal without using any additional circuit on the AC adapter side and that enables operation requiring a large consumption current even during the charge.

### MEANS FOR SOLVING THE PROBLEMS

The invention according to claim 1 is a charge control apparatus for a portable telephone terminal for supplying operation power to a load circuit possessed by the portable telephone terminal and for charging a battery incorporated in the terminal, including battery voltage detector means for detecting a battery voltage, charge current detector means for detecting a charge current to charge the battery, load current detector means for detecting a load current used for the load circuit, and charge control means for controlling the charge to the battery, wherein the charge control means includes timer means for measuring a period of time in which the battery voltage detected by the battery voltage detector means is equal to or less than a predetermined voltage, and use state judge means for determining whether the period of time measured by the timer means has reached a predetermined time, and the charge control means stops the charge to the battery and supplies a current only to the load circuit if it is determined that the period of time measured by the timer means has reached the predetermined time.

An invention according to claim 2 is the charge control apparatus for a portable telephone terminal in accordance with claim 1, wherein the charge to the battery is restarted if the charge current detected by the charge current detector means is equal to or less than a predetermined current.

An invention according to claim 3 is the charge control apparatus for a portable telephone terminal in accordance with claim 1 or 2, wherein the charge control means supplies quite a small current to the battery before the charge is started and determines whether the voltage detected by the battery voltage detector means is a voltage for which it is determined that the battery requires the charge.

An invention according to claim 4 is the charge control apparatus for a portable telephone terminal in accordance with one of claims 1 to 3, wherein the charge control means applies a termination voltage to the load circuit during the charge to the battery is stopped.

An invention according to claim 5 is the charge control apparatus for a portable telephone terminal in accordance with one of claims 1 to 4, including a first diode for preventing an inverse current of a current to an external power source.

An invention according to claim 6 is the charge control apparatus for a portable telephone terminal in accordance with one of claims 1 to 5, including a second diode for supply a current from the external power source and the battery to the load circuit during the charge to the battery is stopped.

An invention according to claim 7 is a charge control method for use with a charge control apparatus including battery voltage detector means for detecting a battery voltage, charge current detector means for detecting a charge current to charge the battery, load current detector means for detecting a load current used for the load current, and charge control means for controlling the charge to the battery, for supplying operation power to a load circuit possessed by the portable telephone terminal and for charging a battery incorporated in the terminal, wherein the charge control means comprises a step of measuring a period of time in which the battery voltage detected by the battery voltage detector means is equal to or less than a predetermined voltage, a use state judge step of determining whether the period of time measured by the timer means has reached a predetermined time, and a step of stopping the charge to the battery and supplying a current only to the load circuit if it is determined that the period of time measured by the timer means has reached the predetermined time.

An invention according to claim 8 is the charge control method for a portable telephone terminal in accordance with claim 7 including a step of restarting the charge to the battery if the charge current detected by the charge current detector means is equal to or less than a predetermined current.

An invention according to claim 9 is the charge control method for a portable telephone terminal in accordance with claim 7 or 8, wherein the charge control means includes a step of supplying quite a small current to the battery before the charge is started and a step of determining whether the voltage detected by the battery voltage detector means is a voltage for which it is determined that the battery requires the charge.

An invention according to claim 10 is the charge control method for a portable telephone terminal in accordance with one of claims 7 to 9, wherein the charge control means applies a termination voltage to the load circuit during the charge to the battery is stopped.

An invention according to claim 11 is the charge control apparatus for a portable telephone terminal in accordance with one of claims 7 to 10, including a first diode for preventing an inverse current flowing to an external power source.

An invention according to claim 12 is the charge control apparatus for a portable telephone terminal in accordance with one of claims 7 to 11, including a second diode for supply a current from the external power source and the battery to the load circuit during the charge to the battery is stopped.

### ADVANTAGES OF THE INVENTION

In accordance with the present invention, the use state judge circuit determines whether a sufficient voltage is being applied from an AC adapter to the battery and temporarily stops the battery charge to supply the current only to the load circuit if the consumption current consumed by the load circuit is large and a sufficient current is not supplied to the battery, thereby suppressing the heat generated when a sufficient current cannot be supplied to the battery. Additionally, it is possible to prevent the restriction of the use of the load circuit due to the heat generation or the insufficient current.

### BEST MODE FOR CARRYING OUT THE INVENTION

### [First exemplary embodiment]

Next, description will be given of structure and operation of a charge control apparatus of a portable telephone terminal in accordance with a first exemplary embodiment of the present invention.

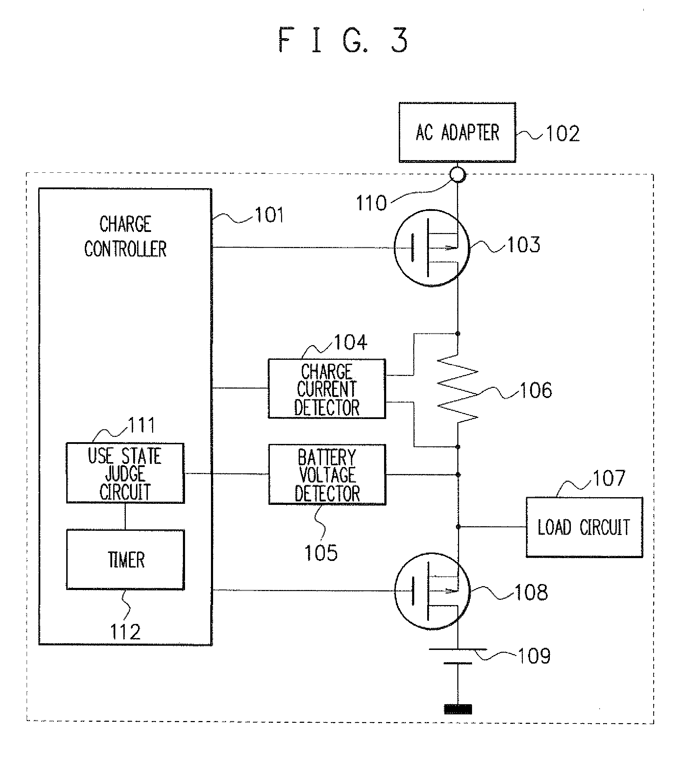

FIG. 3 is a diagram showing a configuration of the charge control apparatus.

The charge control apparatus in accordance with a first exemplary embodiment includes a charge control circuit 101, an AC adapter 102, FETs (103, 108), a charge current detector circuit 104, a battery voltage detector circuit 105, a resistor 106, a load circuit 107, a battery 109, an input terminal 11.0, a use state judge circuit 111, and a timer 112. The resistor 106 and the FETs (103, 108) are disposed in series in a current path between the AC adapter 102 and the battery 109.

Next, description will be given of each constituent element included in the charge control apparatus.

First, the resistor 106 is a resistor for the charge current detector circuit 104 to detect a charge current and a charge module load current, and a voltage between the ends of the resistor 106 is detected. Also, the detector circuit 104 detects the charge current and the charge module load current according to the potential difference between the resistor **106** (the voltage drop due to the resistor 106). The timer 112 measures time that passed from when the battery voltage attained by the use state judge circuit 111 is equal to or less than a predetermined voltage. Moreover, the judge circuit 111 obtains the battery voltage detected by the detector circuit 105, stops the charge to the battery 109 if the time measured by the timer 112 reaches a predetermined length or the battery voltage is equal to or more than a predetermined voltage, and supplies a voltage associated with the minimum consumption current to the load circuit 107 until the consumption current of the load circuit 107 is equal to or less than a predetermined current value. When consumption current of the load circuit 107 is equal to or less than a predetermined current value, the judge circuit 111 restarts the charge to the battery 109. The battery voltage detector 105 detects the voltage (battery voltage) of the battery 109.

Furthermore, the FET 103 adjusts the charge current supplied from the AC adapter 102 to the battery 109, by opening and by closing the current path between the battery 109 and the AC adapter 102 according to the gate voltage applied from the charge control circuit 101. Also, the control circuit 101 controls the FET 103 by adjusting the gate voltage applied to the FET 103 to conduct the constant-current charge, the constant-current and constant-voltage charge, and the constant-voltage charge for the battery 109. Since the control circuit 101 limits the battery voltage to a predetermined voltage and limits the upper-limit value of the charge current to a value equal to or less than a predetermined value, the restriction on desired operations of the user is eased.

Next, description will be given of the charge control carried out by the charge control circuit 101 for the battery 109.

First, the charge control circuit 101 carries out the constant-current charge with quite a small current value (tens of milliampere (mA) for a lithium ion battery). This is conducted for protection of an over-discharge battery. Thereafter, the control circuit 101 determines whether the battery voltage detected by the detector circuit 105 is a voltage (here the voltage is assumed to be equal to or more than V2 and equal to or less than V3) for which it can be determined that the battery requires the charge. If the battery voltage detected by the detector circuit 105 ranges from about 2.5 V to about 4 V while the battery to be charged is a lithium ion battery, the control circuit 101 determines that the battery requires the charge.

If it is determined that the battery requires the charge, the charge control circuit 101 controls the FET 103 to conduct the rapid constant-current charge with a large current 12 (hundreds of mA for a lithium ion battery). The controller 101 conduct the voltage control for the FET 103 with a voltage (V4) that does not cause failure in the battery 109. For the lithium ion battery, the voltage control is conducted at the FET 103 with a voltage equal to or less than about 4.2 V. Therefore, when the battery voltage reaches V4, the charge current gradually lowers from the large current 12, and the control circuit 101 changes to the constant-voltage charge control to retain the battery voltage at V4. After this point, when the charge current lowers and the battery 109 is fully charged (when the charge current is 13), the controller 101 closes the gate of the FET 103 to finish the charge control.

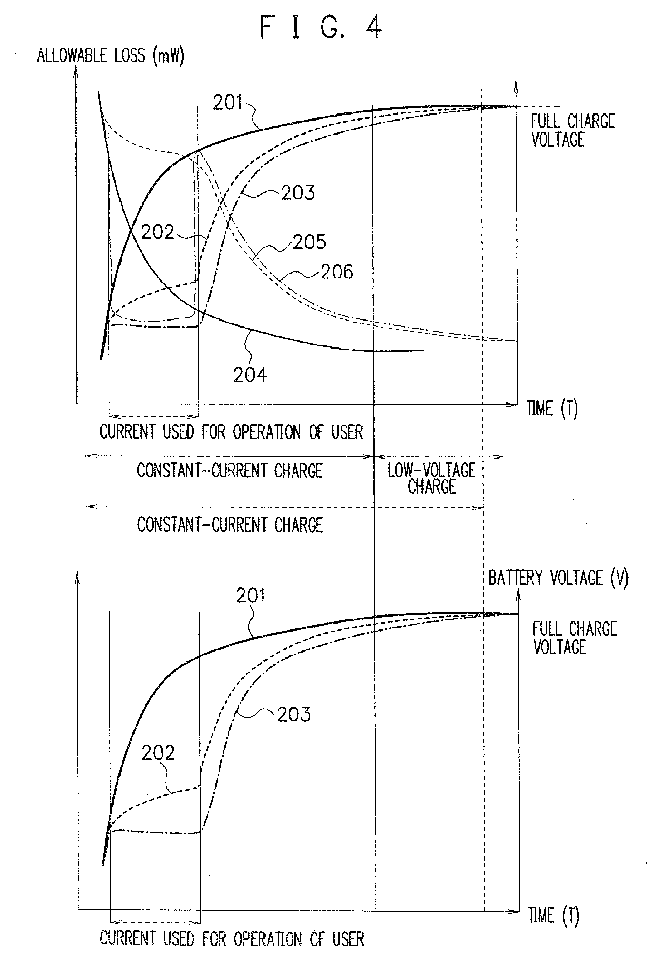

Referring to FIG. 4, there is shown a relationship between the battery voltage in the use state and the allowable dissipation. The heat is determined by the accumulation of the allowable dissipation and the heat radiation per time. Therefore, if the large allowable dissipation continues, the influence of the heat becomes greater. While the user does not use the portable telephone terminal (i.e., in which the load current of the load circuit 107 is quite small), since the period of time in which the constant-current charge is conducted is short and the battery voltage rapidly increases (201), the state in which the allowable dissipation of the FET 103 is large does not continue and the influence of the heat generation is limited (204).

While the user operates during the charge the portable telephone terminal, which requires a large consumption current, namely, while the consumption current of the load circuit 107 is large, most of the charge module load current flows into the load circuit 107. Therefore, the charge current to the battery lowers. As a result, the battery voltage slowly increases (202) and the state of the large allowable dissipation continues (205).

The battery voltage detector 104 monitors, for example, once per one minute (t1), whether the battery voltage is less than V5 (V5 = V3 is assumed in this situation). The charge controller 101 periodically controls the FET 108 according to the monitor result to confirm a ratio of the load current to the charge module load current. If the ratio is large, the controller 101 controls the FET 108 to stop the charge to the battery 109 to carry out the constant-voltage charge with a voltage (the termination voltage of the battery voltage) for which the load current takes a minimum value. Incidentally, the load circuit 107 such as a Central Processing Unit (CPU), a display module, and a radio section includes a boot circuit and a buck circuit. Consequently, the consumption current in the load circuit 107 varies according to the battery voltage and becomes smaller as the voltage value increases. Therefore, the constant-voltage charge is carried out with the termination voltage V6 (= V4) in this case.

In accordance with the configuration above, when the charge current to the battery 109 is insufficient, the control is conducted to reduce the allowable dissipation to the minimum value and hence the charge is conducted by suppressing the influence of the heat generation. Also, even when the consumption current of the load circuit 107 exceeds the required current value due to the current limiting of the AC adapter 102 and the charge circuit, it is possible by supplying the current with the voltage V6 to suppress the increase in the current value to resultantly reduce the current value for which the current limiting is not conducted. Therefore, the user can utilize the portable telephone terminal without restrictions.

In the explanation of the structure in the embodiment, the load circuit 107 of FIG. 3 indicates circuitry except the control circuit for the portable telephone terminal. For example, the circuitry includes an operation module, a display section, and a radio module. This is well known to those skilled in the art, and is not directly related to the present invention, and hence description of detailed structure thereof will be avoided.

Further, the FET 103, the control means of the charge voltage, may be replaced with a PNP bipolar transistor. The FET 108 may also be replaced with a PNP bipolar transistor.

According to the embodiment, the termination voltage V6 is assumed to be equal to V4. However, when the termination voltage V6 is applied, the charge to the battery 109 is stopped. Therefore, the voltage to be supplied may equal to the voltage of the AC adaptor 102 which is higher than V4 such that the allowable dissipation of the FET 103 takes the minimum value. As for V5, although the value thereof is set to the value of V3, the value may be equal to V4 or may be unconditionally determined.

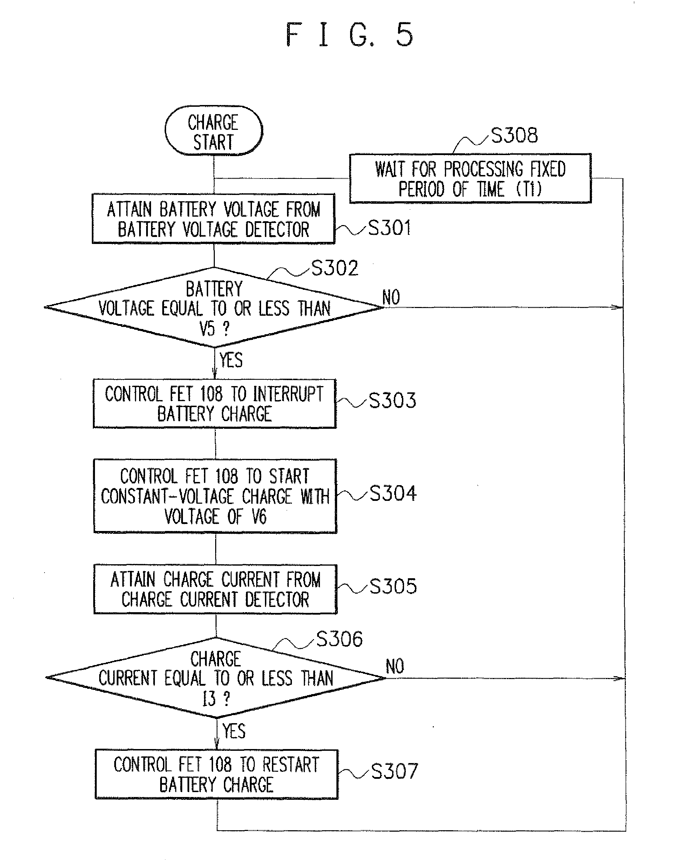

Subsequently, operation of the use state judge circuit 111 shown in FIG. 3 will be described by referring to the flowchart shown in FIG. 5.

When the charge is started from the AC adapter 102 to the battery 109, the use state judge circuit 111 obtains the battery voltage of the battery 109 from the battery voltage detector 105 at an interval of t1 (step S301). The judge circuit 111 makes a check to determine whether the battery voltage acquired from the detector 105 is equal to or less than the voltage V5 for a predetermined period of time (step S302). If the battery voltage of the battery 109 is higher than the voltage V5 (step S302/NO), the judge circuit 111 determines that the influence of the heat generation is small and continues monitoring the battery voltage at every interval of t1 (step S308).

If the battery voltage of the battery 109 remains equal to or less than the voltage V5 (step S302/YES) for a certain period of time, the judge circuit 111 controls the FET 108 to stop the charge to the battery 109 (step S303), and carries out the constant-voltage charge with the voltage V6 (step S304). During the constant-voltage charge with the voltage V6, the charge current detector 104 monitors the consumption current supplied to the load circuit 107 (step S305) and determines whether the consumption current is equal to or less than 13 (step S306). If the consumption current consumed by the load circuit 107 is more than 13 (step 8306/NO), the current detector 104 continues monitoring the consumption current supplied to the load circuit 107 (step S308). If the consumption current consumed by the load circuit 107 is equal to or less than 13 (step S306/YES), the charge controller 101 controls the FET 108 to restart the charge to the battery 109 (step S307). In this connection, even after the charge to the battery 109 is restarted (step S307), the voltage detector 105 simultaneously restarts monitoring the voltage applied to the battery 109 (step S308).

In accordance with the charge control apparatus according to the present invention, the use state judge circuit 111 makes a check to determine whether a sufficient voltage is applied from the AC adaptor 102 to the battery 109. If the consumption current consumed by the load circuit 107 is large and the sufficient current is not applied to the battery 109, the charge to the battery 109 is temporarily stopped and the current is supplied only to the load circuit 107. It is resultantly possible to suppress the heat generation that is produced because the sufficient current is not applied to the battery 109. Moreover, it is possible to prevent the event in which the use of the load circuit is restricted due to the heat generation or the insufficient current.

### [Second exemplary embodiment]

Next, description will be given of a charge control apparatus according to another embodiment of the present invention.

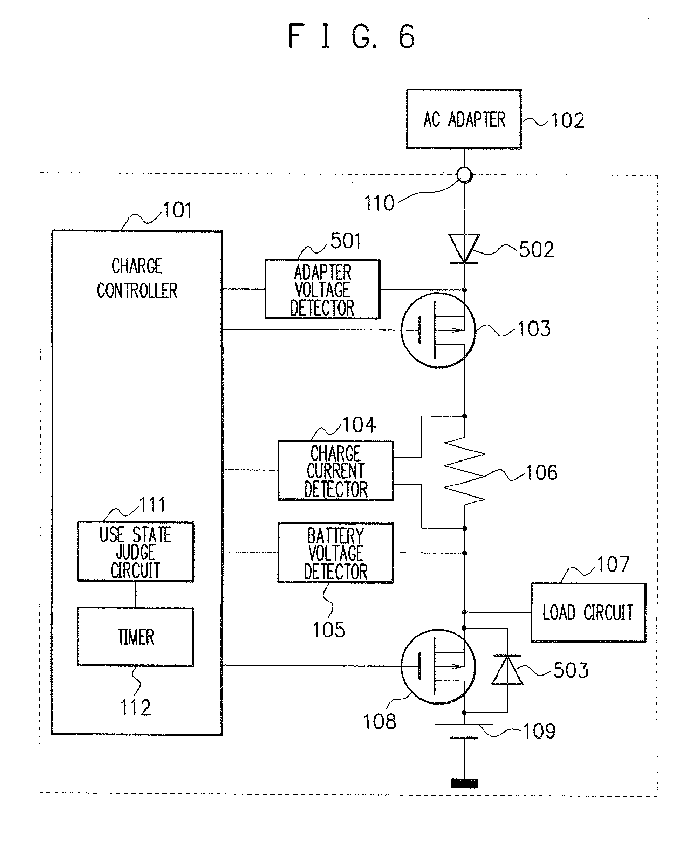

First, description will be given of structure of the charge control apparatus according to the embodiment by referring to FIG. 6. Incidentally, the configuration of the charge control apparatus according to the embodiment is basically similar to that of the charge control apparatus according to the first embodiment. Therefore, description will be avoided for the sections having the same functions as those of the first embodiment.

The charge control apparatus according to the embodiment includes a charge control circuit 101, an AC adapter 102, FETs 103 and 108, a charge current detector circuit 104, a battery voltage detector circuit 105, a resistor 106, a load circuit 107, a battery 109, an input terminal 110, an adapter voltage detector circuit 501, and diodes 502 and 503.

The adapter voltage detector circuit 501 detects the voltage on the AC adapter side 102. The charge control circuit 101 makes a check, based on the voltage detected by the voltage detector circuit 501, whether the AC adapter 102 is connected to the input terminal 110. Furthermore, the charge controller 101 determines, on the bases of the voltage detected by the detector circuit 501, whether the AC adapter 102 connected to the input terminal 110 can output a chargeable voltage to the battery 109. Additionally, the charge controller 101 determines the termination voltage V6 according to the voltage detected by the voltage detector circuit 501.

The diode 502 prevents an inverse current to the AC adapter 102. The diode 503 is additionally disposed to supply a current from the battery side when the consumption current of the load circuit 107 momentarily exceeds the charge current while the FET 108 is controlled to stop the charge to the battery 109. In the operation, the voltage detector 105 monitors to determine whether the voltage V5 is equal to the voltage V4. If the voltage V5 exceeds the voltage V4, the controller 101 supplies a current from the battery 109 to the load circuit 107.

Thanks to addition of these configurations, when the user utilizes the portable telephone terminal with a large current, the voltage value that can be applied from the AC adapter 102 is compared with the voltage value required for the load circuit 107 such that the lower one of these voltages can be used as the voltage V6 to carry out the constant-voltage charge. As a result, since the terminal can be employed under a condition in which the consumption current of the load circuit 107 is low, the terminal can be used even if the battery 109 is insufficient and even if the consumption current is large. In addition, if the current that can be applied from the battery is larger than the charge current and the voltage V5 is equal to the voltage V4, it is possible to supply, from the battery 109 by use of the diode 503, the additional current when the charge module load current is not enough for the load circuit 107.

Incidentally, although the FET 108 is adopted to completely stop the charge to the battery 109 in the embodiment, it is also possible to continue the charge to the battery 109 by using a current of about tens of milliampere that rarely exerts influence upon the heat generation. That is, the charge is turned on and off by use of the FET 108 to supply quite a small current according to the gate control. Also, there may be employed a configuration in which a resistor is additionally disposed in parallel with the diode 503 to supply quite a small current.

### BRIEF DESCRIPTION OF DRAWINGS

[FIG. 1] Diagram showing a configuration of a conventional charge control apparatus.
[FIG. 2] Diagram showing a configuration of a conventional charge control apparatus.
[FIG. 3] Diagram showing a configuration of a charge control apparatus according to an embodiment.
[FIG. 4] Diagram showing a relationship of the allowable dissipation to time in the charge control apparatus.
[FIG. 5] Flowchart showing operation of the charge control apparatus according to an embodiment.
[FIG. 6] Diagram showing a configuration of a charge control apparatus according to an embodiment.

### DESCRIPTION OF REFERENCE NUMERALS

- 101: Charge control circuit
- 102: Adapter
- 103, 108: FET
- 104: Charge current detector circuit
- 105: Battery voltage detector circuit
- 106: Resistor
- 107: Load circuit
- 109: Battery
- 110: Input terminal
- 111: Use state judge circuit
- 112: Timer
- 501: Adapter voltage detector circuit
- 502, 503: Diode

## Claims

1. A charge control apparatus for a portable telephone terminal for supplying operation power to a load circuit possessed by the portable telephone terminal and for charging a battery incorporated in the terminal, comprising
battery voltage detector means for detecting a battery voltage;
charge current detector means for detecting a charge current to charge the battery;
load current detector means for detecting a load current used for the load circuit; and
charge control means for controlling the charge to the battery, wherein
the charge control means comprises
timer means for measuring a period of time in which the battery voltage detected by the battery voltage detector means is equal to or less than a predetermined voltage, and
use state judge means for determining whether the period of time measured by the timer means has reached a predetermined time, and
the charge control means stops the charge to the battery and supplies a current only to the load circuit if it is determined that the period of time measured by the timer means has reached the predetermined time.

2. The charge control apparatus for a portable telephone terminal in accordance with claim 1, wherein the charge to the battery is restarted if the charge current detected by the charge current detector means is equal to or less than a predetermined current.

3. The charge control apparatus for a portable telephone terminal in accordance with claim 1 or 2, wherein the charge control means supplies quite a small current to the battery before the charge is started and determines whether the voltage detected by the battery voltage detector means is a voltage for which it is determined that the battery requires the charge.

4. The charge control apparatus for a portable telephone terminal in accordance with one of claims 1 to 3, wherein the charge control means applies a termination voltage to the load circuit during the charge to the battery is stopped.

5. The charge control apparatus for a portable telephone terminal in accordance with one of claims 1 to 4, comprising a first diode for preventing an inverse current to an external power source.

6. The charge control apparatus for a portable telephone terminal in accordance with one of claims 1 to 5, comprising a second diode for supply a current from the external power source and the battery to the load circuit during the charge to the battery is stopped.

7. A charge control method for use with a charge control apparatus comprising battery voltage detector means for detecting a battery voltage, charge current detector means for detecting a charge current to charge the battery, load current detector means for detecting a load current used for the load current, and charge control means for controlling the charge to the battery, for supplying operation power to a load circuit possessed by the portable telephone terminal and for charging a battery incorporated in the terminal,
the charge control means comprises
a step of measuring a period of time in which the battery voltage detected by the battery voltage detector means is equal to or less than a predetermined voltage,
a use state judge step of determining whether the period of time measured by the timer means has reached a predetermined time, and
a step of stopping the charge to the battery and supplying a current only to the load circuit if it is determined that the period of time measured by the timer means has reached the predetermined time.

8. The charge control method for a portable telephone terminal in accordance with claim 7, comprising a step of restarting the charge to the battery if the charge current detected by the charge current detector means is equal to or less than a predetermined current.

9. The charge control method for a portable telephone terminal in accordance with claim 7 or 8, wherein the charge control means comprises:
a step of supplying quite a small current to the battery before the charge is started; and
a step of determining whether or not the voltage detected by the battery voltage detector means is a voltage for which it is determined that the battery requires the charge.

10. The charge control method for a portable telephone terminal in accordance with one of claims 7 to 9, wherein the charge control means applies a termination voltage to the load circuit during the charge to the battery is stopped.

11. The charge control apparatus for a portable telephone terminal in accordance with one of claims 7 to 10, comprising a first diode for preventing an inverse current to an external power source.

12. The charge control apparatus for a portable telephone terminal in accordance with one of claims 7 to 11, comprising a second diode for supply a current from the external power source and the battery to the load circuit during the charge to the battery is stopped.
